(19) Europäisches Patentamt
European Patent Office
Office européen des brevets

(11) **EP 3 362 951 B1**

(12) **EUROPEAN PATENT SPECIFICATION**

(45) Date of publication and mention
of the grant of the patent:
**21.07.2021 Bulletin 2021/29**

(51) Int Cl.:
*G06N 3/04* *(2006.01)*    *G06N 3/08* *(2006.01)*

(21) Application number: **16802213.5**

(22) Date of filing: **11.11.2016**

(86) International application number:
**PCT/US2016/061659**

(87) International publication number:
**WO 2017/083744 (18.05.2017 Gazette 2017/20)**

(54) **NEURAL RANDOM ACCESS MACHINE**

NEURONALE ZUFALLSZUGRIFFSMASCHINE

MACHINE NEURALE À ACCÈS ALÉATOIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.11.2015 US 201562285941 P**

(43) Date of publication of application:
**22.08.2018 Bulletin 2018/34**

(73) Proprietor: **Google LLC
Mountain View, CA 94043 (US)**

(72) Inventors:
• **SUTSKEVER, Ilya
Mountain View, California 94043 (US)**
• **ANDRYCHOWICZ, Marcin
London
Greater London N1C 4AG (GB)**
• **KURACH, Karol Piotr
8002 Zurich (CH)**

(74) Representative: **Williams, Michael David et al
Marks & Clerk LLP
1 New York Street
Manchester M1 4HD (GB)**

(56) References cited:
**US-A- 4 974 169**

• **Alex Graves ET AL: "Neural Turing Machines", ,
20 October 2014 (2014-10-20), pages 1-26,
XP055239371, Retrieved from the Internet:
URL:http://arxiv.org/pdf/1410.5401v1.pdf
[retrieved on 2016-01-07]**
• **Edward Grefenstette ET AL: "Learning to
Transduce with Unbounded Memory", , 3
November 2015 (2015-11-03), pages 1-14,
XP055339978, Retrieved from the Internet:
URL:https://arxiv.org/pdf/1506.02516.pdf
[retrieved on 2017-01-27]**
• **Armand Joulin ET AL: "Inferring Algorithmic
Patterns with Stack-Augmented Recurrent
Nets", , 1 June 2015 (2015-06-01), pages 1-10,
XP055239416, Retrieved from the Internet:
URL:http://arxiv.org/pdf/1503.01007.pdf
[retrieved on 2016-01-07]**
• **Sreerupa Das ET AL: "Learning Context-free
Grammars: Capabilities and Limitations of a
Recurrent Neural Network with an External Stack
Memory", Advances in Neural Information
Processing Systems 5., 1 January 1993
(1993-01-01), XP055239425, Retrieved from the
Internet:
URL:http://citeseerx.ist.psu.edu/viewdoc/d
ownload?doi=10.1.1.54.730&rep=rep1&type=pd
f [retrieved on 2016-01-07]**
• **Karol Kurach ET AL: "Neural Random-Access
Machines", , 9 November 2016 (2016-11-09),
pages 1-17, XP055339965, Retrieved from the
Internet:
URL:https://arxiv.org/pdf/1511.06392v3.pdf
[retrieved on 2017-01-27]**

**Description**

BACKGROUND

This specification relates to neural network system architectures.

Neural networks are machine learning models that employ one or more layers of nonlinear units to predict an output for a received input. Some neural networks include one or more hidden layers in addition to an output layer. The output of each hidden layer is used as input to the next layer in the network, i.e., the next hidden layer or the output layer. Each layer of the network generates an output from a received input in accordance with current values of a respective set of parameters.

Some neural networks are recurrent neural networks. A recurrent neural network is a neural network that receives an input sequence and generates an output sequence from the input sequence. In particular, a recurrent neural network can use some or all of the internal state of the network from processing a previous input in computing a current output. An example of a recurrent neural network is a Long Short-Term Memory (LSTM) neural network that includes one or more LSTM memory blocks. Each LSTM memory block can include one or more cells that each include an input gate, a forget gate, and an output gate that allow the cell to store previous states for the cell, e.g., for use in generating a current activation or to be provided to other components of the LSTM neural network. Alex Graves ET AL: "Neural Turing Machines" (2014-10-20) describes a neural network system for generating a system output from a system input, the neural network system comprising a memory and a controller neural network.

SUMMARY

This specification describes a neural network system for generating a system input from a system output.

The system includes a memory storing a set of register vectors and data defining a plurality of modules. Each module is a respective function that takes as input one or more first vectors and outputs a second vector.

The system also includes a controller neural network that is configured to, for each of multiple time steps, receive a neural network input for the time step and process the neural network input for the time step to generate a neural network output for the time step.

The system also includes a subsystem that is configured to, for each of the time steps: determine, from the neural network output, inputs to each of the plurality of modules; process, for each of the modules, the input to the module using the module to generate a respective module output; determine, from the neural network output, updated values for the register vectors using the module outputs; and generate a neural network input for the next time step from the updated values of the register vectors.

The system includes an external variable-sized memory tape. The plurality of modules may comprise a first module that reads from the external variable-sized memory tape in accordance with the input to the first module and a second module that writes to the external variable-sized memory tape in accordance with the input to the second module.

The subsystem may be configured to initialize the external variable-sized memory tape with the system input. The values stored in the external variable-sized memory tape after the last time step of the plurality of time steps may be the system output.

The neural network input for the next time step may be a binarized value of each of the register vectors.

The subsystem may be further configured to, for each time step: determine, from the neural network output, whether the time step should be the last time step in the plurality of time steps.

The controller neural network may be a recurrent neural network.

The specification also describes a method for generating a system output from a system input using a neural network system comprising a controller neural network configured to, for each of a plurality of time steps, receive a neural network input for the time step, and process the neural network input for the time step to generate a neural network output for the time step. The method comprises, for each of the plurality of time steps: storing a set of register vectors and data defining a plurality of modules in memory, wherein each module is a respective function that takes as input one or more first vectors and outputs a second vector; determining, from the neural network output, inputs to each of a plurality of modules, wherein each module is a respective function that takes as input one or more first vectors and outputs a third vector; processing, for each of the modules, the input to the module using the module to generate a respective module output; determining, from the neural network output, updated values for a plurality of register vectors using the module outputs; and generating a neural network input for the next time step from the updated values of the register vectors.

The neural network system comprises an external variable-sized memory tape. The plurality of modules may comprise a first module that reads from the external variable-sized memory tape in accordance with the input to the first module and a second module that writes to the external variable-sized memory tape in accordance with the input to the second module. The method may further comprise initializing the external variable-sized memory tape with the system input. The values stored in the external variable-sized memory tape after the last time step of the plurality of time steps may be the system output. The neural network input for the next time step may be a binarized value of each of the register vectors.

The method may further comprise determining, from the neural network output, whether the time step should be the last time step in the plurality of time steps.

The controller neural network may be a recurrent neural network.

Advantageous implementations can include one or more of the following features. The system can include a neural network system that manipulates pointers, stores pointers in memory, and dereferences pointers into a working memory. As such, the system can provide solutions to operational problems that require pointer chasing and manipulation. The system can learn sequence-to-sequence transformations by initializing registers with input sequences and producing corresponding output sequences. Further, the output sequences can be used to update the values of the registers. The system includes an external variable-sized memory tape. The variable sized-memory tape is used by the system to increase the efficiency of the system in generalizing long input sequences. Additionally, the variable-sized memory tape is used by the system as an input-output channel. In this instance, the variable-sized memory tape can be initialized when system inputs are received by the system. Additionally, system outputs that are generated in response to the system inputs can be stored in the variable-sized memory tape by the system.

The details of one or more embodiments of the invention are set forth in the accompanying drawings and the description below. Other features and advantages of the invention will become apparent from the description, the drawings, and the claims.

BRIEF DESCRIPTION OF THE DRAWINGS

FIG. 1 shows an example neural network system.
FIG. 2 is a flow diagram of an example process for generating a neural network input for a subsequent time step from a neural network output at a current time step.
FIG. 3 is a flow diagram of an example process for interacting with an external variable-sized memory tape.

Like reference numbers and designations in the various drawings indicate like elements.

DETAILED DESCRIPTION

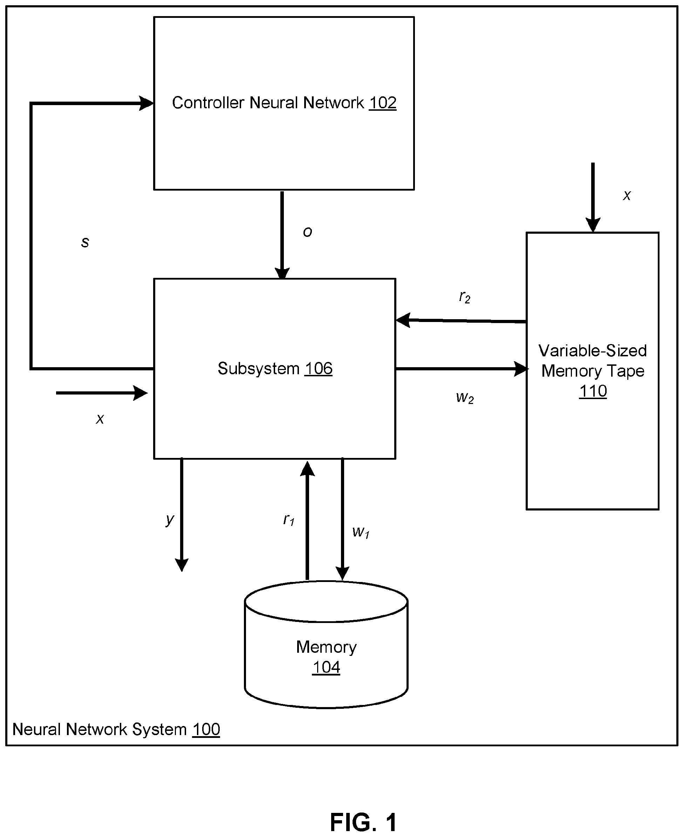

FIG. 1 shows an example neural network system 100. The neural network system 100 is an example of a system, in which the systems, components, and techniques described below are implemented.

The neural network system 100 receives system inputs and generates system outputs from the system inputs. For example, the neural network system 100 can receive a system input x and generate a system output y from the system input x. The neural network system 100 can store the system output in an output data repository, or provide the outputs for use as inputs by a remote system, or any combination thereof.

The neural network system 100 can be used for transforming an input sequence into an output sequence by, as will be described in more detail below, initializing registers with system inputs and providing system outputs including sequences that are represented by updated values of the registers after a predetermined number of time steps.

For example, if the input sequence is a sequence of words in an original language, e.g., a sentence or phrase, the target sequence may be a translation of the input sequence into a target language, i.e., a sequence of words in the target language that represents the sequence of words in the original language. As another example, if the input sequence is a sequence of graphemes, e.g., the sequence {g, o, o, g, l, e}, the target sequence may be a phoneme representation of the input sequence, e.g., the sequence {g, uh, g, ax, l}. As another example, if the input sequence is a sequence of words in an original language, e.g., a sentence or phrase, the target sequence may be a summary of the input sequence in the original language, i.e., a sequence that has fewer words than the input sequence but that retains the essential meaning of the input sequence.

The neural network system 100 includes a controller neural network 102, memory 104, and a subsystem 106.

The controller neural network 102 is a neural network that is configured to receive a neural network input and process the neural network input to generate a neural network output. In some implementations, the controller neural network 102 is a feedforward neural network. In some other implementations, the controller neural network 102 is a recurrent neural network, e.g., an LSTM neural network.

The subsystem 106 receives outputs o generated by the controller neural network 102. For example, the subsystem 106 can receive an output and use the received output to operate on a set of registers that are stored in the memory 104 using a predetermined number of modules that each take a respective input and provide a respective output. That is, the subsystem 106 receives an output o from the controller neural network 102 and, based on the output o, interacts with the registers using the modules to update the values of the registers. The updated values of the registers can be stored in the memory 104. For example, the subsystem can read $r_1$ register values from the memory 104, interact with the register values using the modules to determine updated values of the registers, and write $w_1$ to the memory 104 based on the updated values.

The neural network system 100 includes an external variable-sized memory tape 110. The external variable-sized memory tape 110 is used by the neural network system 100 to increase the memory capacity of the neural network system 100. Further, the external variable-sized memory tape 110 is used as an input-output channel of the neural network system 100. In this instance, the external variable-sized memory tape 110 can be initialized with the system input x. Additionally, the external variable-sized memory tape 110 is used for the implementation of particular modules, such as a read module and a write module. For example, the subsystem 106 can be configured to read $r_2$ from the memory tape 110 using the read module and write $w_2$ to the external variable-sized external memory 110 using the write module. The utilization of the external variable-sized memory tape 110 will be discussed further herein.

The controller neural network 102 can receive vectors of registers as input. Specifically, each register can store a distribution over a set of possible values for the register such as {0, 1, ..., M-1}, where M represents a constant. The distribution of each register can be stored as register vectors $p$, in which the register vectors satisfy $p_i \geq 0$ and $\sum_i p_i$.

The register vectors p can be stored in the memory 104 by the subsystem 106. The register vectors can be read $r$ by the subsystem 106 and provided as input s to the controller neural network 102.

In some aspects, the subsystem 106 can be configured to access the registers via a plurality of modules. For example, the subsystem 106 can be configured to provide inputs to each of the modules based on received neural network outputs of the controller neural network 102. The modules can be configured to generate outputs based on the inputs received by the modules. The subsystem 106 can be configured to use the outputs of the modules to update the register vectors. The updated register vectors may be provided to the controller neural network 102 as input by the subsystem 106. Specifically, the modules can include functions, such as integer addition or an equality test. The operations of the subsystem 106 will be described further herein.

The neural network input can include inputs that depend on values of the registers. In another example, the controller neural network 102 can receive neural network inputs representing probability distributions that are stored as vectors in the registers. The controller neural network 102 can also process the neural network inputs to generate neural network outputs.

The probability distributions can be stored as vectors $p \in R^M$. In this instance, R represents the registers and M represents a constant. In some aspects, if all of the probability distributions of each register are provided as neural network inputs to the controller neural network 102, the number of parameters of the neural network system 100 can depend on the value of M. In this instance, the controller neural network 102 may not be configured to generalize to different memory sizes. To accommodate this instance, the controller neural network 102 may instead receive a neural network input as a binarized value for each of the register vectors $1 \leq i \leq R$. The binarized value of a register is the probability that the current value in the register equals 0.

The controller neural network 102 may be implemented as a discrete neural network when provided with binarized values as neural network inputs. In this instance, the inputs to the controller neural network 102 may be binarized values of the registers. Thus, instead of executing the controller neural network 102, the discretized neural network output of the controller neural network 102 may be precomputed for each of the registers' binarized values. In this instance, the controller neural network 102 may generate the neural network outputs efficiently in comparison to the non-discretized version of the controller neural network 102.

The subsystem 106 can be configured to receive neural network output o from the controller neural network 102 for an initial time step and provide a neural network input s to the controller neural network 102 for a subsequent time step. In certain aspects, the subsystem 106 also receives system input x to use in providing the neural network input for the subsequent time step. In certain aspects, the neural network input generated by the subsystem 106 can be provided as a system output $y$. Further, the subsystem 106 can be configured to determine whether each time step should be the last time step in a plurality of time steps. As such, the subsystem 106 can determine when a time step should be output as a system output.

In other words, from each neural network output generated by the controller neural network 102, the subsystem 106 determines whether to cause the neural network 102 to generate one or more additional neural network inputs s for the current system input $x$. The subsystem 106 then determines, from each neural network output o generated by the neural network 102 for the system input $x,$ the system output $y$ for the system input $x.$

The subsystem 106 can be configured to select particular inputs to be provided to a plurality of modules. The subsystem 106 can determine the selected inputs based on the neural network output provided by the controller neural network 102. Additionally, the subsystem 106 can determine the selected inputs based on a received system input. The modules can be used to produce outputs corresponding to the selected inputs. For example, each module can receive one or more first vectors as inputs and provide a second vectors as output. In certain aspects, the vectors can correspond to values of registers. In other aspects, the vectors can correspond to probability distributions of the registers. Each of the vectors can be provided by the subsystem 106 as input to the module, and acted on by the modules to produce corresponding outputs.

The subsystem 106 can further be configured to determine which values of the outputs produced by the modules to store in the registers. For example, the modules can include a predetermined set of modules that are executed by the subsystem 106 at each time step. Given modules $m_1, m_2,..., m_Q$, each of the modules can include a function such as the following,

$$m_i : \{0,1,...,M-1\} \times \{1,2,...,M-1\} \rightarrow \{0,1,...,M-1\}$$

In this instance, the modules may each be provided with inputs that are determined by the subsystem 106. The subsystem 106 can be configured to determine inputs for each of the modules from a set of inputs such as $\{r_1,...,r_R,o_1,...,o_{i-1}\}$. In this instance, $r_j$ represents a value stored in a $j$-th register at a current time step and $o_j$ represents the output of the module $m_j$ at the current time step.

In certain aspects, the subsystem 106 can be configured to determine a weighted average of the registers' values $\{r_1,...,r_R,o_1,...,o_{i-1}\}$ for each $1 \le i \le Q$. The weighted average may be provided as inputs to each of the modules. For example, the weighted average of the registers' values can be determined by the following calculations,

$$o_i = m_i((r_i,...,r_R,o_1,...,o_{i-1})^T softmax(a_i), (r_1,...,r_R,o_1,...,o_{i-1})^T softmax(b_i))$$

In this instance, ai and bi represent vectors that are produced by the controller neural network 102 and provided to the subsystem 106. As the values $r_j$ are probability distributions, the inputs that are provided to the modules mi are also probability distributions.

In some aspects, the modules mi are defined for integer inputs and outputs. In other aspects, the modules are extended to probability distributions as inputs and corresponding outputs. For example, given every $0 \le c < M$, the probability distribution output of a module can be determined by the following calculations,

$$P(m_i(A, B) = c) = \sum_{0 \le a,b < M} P(A = a)P(B = b)[m_i(a,b) = c]$$

In this instance, a and b each represent vectors that are output by the controller neural network 102 to the subsystem 106, $m_i$ represents the modules that interact with the vectors, and c represents the output vector of the modules.

After the modules produce the corresponding outputs, the subsystem 106 can be configured to determine updated values to store in the registers based on the outputs produced by the modules. The updated values can represent probability distributions that are stored as vectors in the registers. The subsystem 106 can be configured to simultaneously update the outputs of the modules ci as well as the values of the registers. The updated values of the module outputs, in the form of vectors, as well as the updated values of the registers can be determined by the following computations,

$$r_i = (r_1,...,r_R,o_1,...,o_Q)^T softmax(c_i)$$

The neural network system 100 can be configured to manipulate and dereference pointers. Specifically, the neural network system 100 can be configured to manipulate pointers, store pointers in memory, and dereference pointers into a working memory. In certain aspects, the neural network system 100 can be provided with dereferencing as a primitive such that the neural network system 100 can be trained on problems whose solutions require pointer chasing and manipulation. For example, the neural network system can be trained on problems such as linked list problems in which the neural network system 100 must search for a $k$-th element and find the first element with a given value.

The neural network system 100 can be trained using gradient descent. In training the neural network system 100, gradient clipping can be performed so that overflow does not occur. For example, gradients with intermediate values inside backpropagation can become large and lead to overflow in single-precision floating-point arithmetic. In this instance, gradient clipping can be used within the execution of backpropagation to rescale the gradients and prevent overflow. Additionally, random Gaussian noise can be added to the computed gradients during gradient descent. The variance of the random Gaussian noise can enhance the stability of the neural network system 100 during training.

The neural network system 100 is extended with an external variable-sized memory tape 110. The variable-sized memory tape 110 can be used to generalize relatively long sequences of system inputs and/or neural network inputs that are provided to the controller neural network 102. The variable-sized memory tape 110 can include *M* memory cells that each store a distribution over the set {0,1,...,M-1}. The distribution over the set {0,1,...,M-1} can be identified by pointers to specific locations in the memory 104.

The variable-sized memory tape 110 can include a state that is described by a particular matrix. For example, the state of the variable-sized memory tape 110 can be described by the matrix

$$\mathcal{M} \in R_M^M.$$

In this instance, the value

$$\mathcal{M}_i^j|$$

represents the probability that the i-th memory cell in the matrix holds the value j.

The subsystem 106 is configured to interact with the variable-sized memory tape 110 using two particular modules. The two particular modules includes a read module and a write module. The subsystem 106 is configured to read a pointer as input o from the variable-sized memory tape 110 by the subsystem 106. In response to reading the pointer as input, the read module can return a value stored under a given address in the variable-sized tape memory. As such, the subsystem 106 can be configured to read *r* the particular value from the variable-sized tape memory based on the output of the read module.

The read module can be extended to blurred pointers. For example, if a pointer p is a vector representing the probability distribution of the pointer is provided as input to the read module, the read module of the subsystem 106 can be configured to return the value $\mathcal{M}^T p$. In some aspects, the distribution stored for each memory cell can be interpreted by the subsystem 106 as a blurred address in the variable-sized memory tape 110. Further, each of the distributions can be used by the subsystem 106 as a blurred pointer. Thus, the distribution over the set {0,1,...,M-1} may be identified by pointers to specific locations in the variable-sized memory tape 110.

In another example, the subsystem 106 can be configured to read a pointer and a value as an input from the variable-sized memory. In response to receiving the pointer and the value as input, the write module of the subsystem 106 can be configured to provide a write *w* command as a neural network output. The write command can be provided to the controller neural network 102 as a neural network input. The controller neural network 102 can process the write command and provide the command as output to the subsystem 106. As such, the subsystem 106 can be configured to write the value and the address of the pointer in the variable-sized memory tape 110. For example, a pointer *p* and a value a can be stored in the memory 104 by the following operations,

$$\mathcal{M} = (1-p)\mathcal{M} + pa^T$$

The variable-sized memory tape 110 can be implemented as an input-output channel in the neural network system 100. As such, the variable-sized memory tape 110 can be initialized with a particular input sequence and the neural network system can be configured to produce neural network outputs that are stored in the variable-sized memory tape 110. The neural network outputs can include a particular sequence. The subsystem 106 can be configured to initialize a portion of the variable-sized memory tape 110 based on the particular sequence that is provided by the controller neural network 102.

The values stored in the variable-sized memory tape 110 can be read by the subsystem 106 and provided as system output of the neural network system 100. If the subsystem 106 determines to generate a final system output, the subsystem 106 can read a value from the variable-sized memory tape 110 to be provided by the subsystem 106 as the system output.

For example, for each time step *i,* the controller neural network 102 can be configured to output a scalar $f_i$, which the subsystem 106 can use determine a probability with which the subsystem determines whether to terminate processing, i.e., by computing sigmoid($f_i$). In other words, the subsystem 106 can determine from a neural network output whether the current time step should be the last time step in the plurality of time steps. If the system determines, based on the probability, the system uses the most-recently generated time step output as the final system output.

During training, a loss value may be calculated for each input-output pair (*x,y*). The loss value may be defined as the loss of the neural network system 100 as an expected negative log-likelihood of producing the correct output. In one aspect, the loss value may be calculated given a random variable $M_t$ that represents memory content stored in the variable-sized memory tape 110 after a particular time step *t,* and give *T* which represents a maximal allowed number of time steps. In this instance, *T* can be implemented is a hyperparamter of the neural network system 100. The loss value for each input-output pair (*x,y*) can be determined by the following calculations,

$$-\sum_{t=1}^{T} p_t \log(M_t = y | M_{0-x})$$

In this instance, $M_0$ represents the memory content before the square of the first time step ($t^2$). As such, the neural network system 100 can be configured to produce a system output in the last time step if the system output has not yet been produced regardless of the value of *ft*. In this instance, the pointer used in the system output can be determined by the following calculations,

$$p_T = 1 - \sum_{i=1}^{T-1} p_i$$

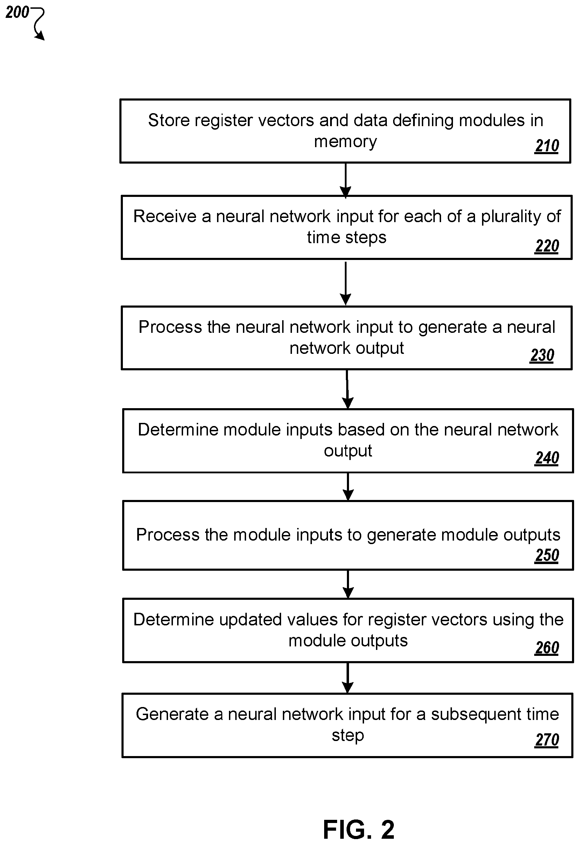

FIG. 2 is a flow diagram of an example process 200 for generating a neural network input for a subsequent time step from a neural network output at a current time step. For convenience, the process 200 will be described as being performed by a system. For example, a neural network random access machine system, e.g., the neural network random access machine system 100 of FIG. 1, in accordance with this specification can perform the process 200.

At step 210, the neural network system stores register vectors as well as data that defines one or more modules in memory. The register vectors can include distributions over a particular set such as {0,1,...,M-1}, where M is a constant. The data defining modules can each represent a function that takes one or more first vectors as input and outputs a second vector. The data defining modules can include a read module and a write module as described above. The data defining modules can also include one or more of the following: a zero module in which zero(a,b) = 0, a one module in which one(a,b) = 1, a two module in which two(a,b) = 2, an increase module in which inc(a,b,) = a+1, an addition module in which add(a,b) = a+b, a subtraction module in which sub(a,b) = a-b, a decrease module in which dec(a,b) = a-1, a less than module in which less_than(a,b,) = [a<b], a lessor equal than module in which less_or_equal_than(a,b) = [a≤b], an equality test module in which equality_test(a,b) = [a=b], a minimum module in which min(a,b) = *min*(a,b), a maximum module in which max(a,b) = *max*(a,b), among other types of modules.

At step 220, the neural network system receives a neural network input at a time step. In some aspects, the neural network system can receive multiple network inputs at each of a plurality of time steps. The neural network input can include inputs that depend on values of the registers, or in other words, values of the register vectors.

At step 230, the neural network system processes the neural network input to generate a neural network output. For example, the neural network can process the neural network input for a particular time step to generate a neural network output for the particular time step.

At step 240, the neural network system determines module inputs based on the neural network output. Specifically, the neural network system can be configured to select inputs to be provided to a particular set of modules. The neural network system can determine the selected inputs based on the neural network output. In certain aspects, the vectors can correspond to vectors of registers. In other aspects, the vectors can correspond to probability distributions of the registers. Each of the vectors can be provided by the subsystem as input to a module, to be acted on by the module to produce corresponding outputs. The vectors and probability distribution can correspond to registers stored in memory of the neural network system.

At step 250, the neural network system processes the module inputs to generate module outputs. Specifically, the neural network system can be configured to process the input to each of the modules, and use each of the modules to generate a respective module output. The modules can be used to produce outputs corresponding to the selected inputs. For example, each module can receive one or more first vectors as inputs and provide a second vector as output. For example, multiple first vectors may be provided as input to a module, such as an integer addition function, and the module may interact with the multiple first vectors to produce a second vector as an output that includes a particular value.

At step 260, the neural network system determines updated values for register vectors using the module outputs. The updated values for the register vectors can correspond to values of the outputs of the modules. In certain aspects, the updated values for the register vectors may be determined in part by the neural network output.

At step 270, the neural network system generates a neural network input for a subsequent time step. Specifically, the neural network system can be configured to generate a neural network output based on the updated values of the register vectors. For example, the neural network input can be the binarized value of each of the registers.

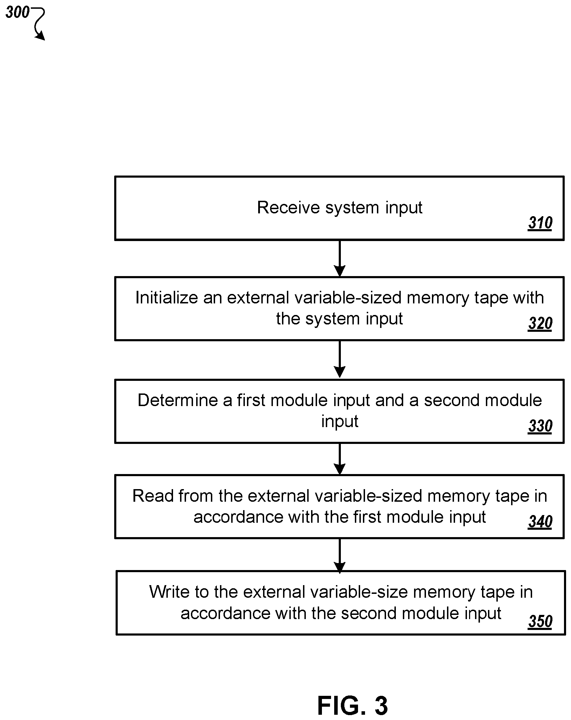

FIG. 3 is a flow diagram of an example process 300 for interacting with the external variable-sized memory tape. For convenience, the process 300 will be described as being performed by a system. For example, a neural network random access machine system, e.g., the neural network random access machine system 100 of FIG. 1, in accordance with this specification can perform the process 300.

At step 310, the neural network system receives a system input.

At step 320, the neural network system initializes external memory with the system input. For example, the neural network system can initialize an external variable-sized memory tape with the system input. The variable-sized memory tape can be initialized so that the neural network system may interact and modify the variable-sized memory tape. The neural network system is configured to read from or write to the variable-sized memory tape based on the received system input. As such, the variable-sized memory tape can be initialized as an input-output component of the neural network system.

In certain aspects, the system input is provided to the variable-sized memory tape directly. As such, the variable-sized memory can be initialized to store the system input. The system input may be stored in memory cells of the variable-sized memory tape. In this instance, the system input can be accessed via the memory cells of the variable-sized memory tape by the neural network system.

At step 330, the neural network system determines module inputs for a given time step based on a neural network output for the time step. In certain aspects, the first module input can correspond to a read module and the second module input can correspond to a write module. The read module can be configured to read from the variable-sized memory tape. The write module can be configured to write to the variable-sized memory tape.

At step 340, the neural network system reads from the external memory in accordance with the first module input. In this instance, the read module of the neural network system may be configured to read from the variable-sized memory tape with respect to the first module input.

At step 350, the neural network system writes from the external memory in accordance with the second module input. In this instance, the write module of the neural network system can be configured to write to the variable-sized memory tape 110 with respect to the second module input.

A number of implementations have been described.

All of the functional operations described in this specification can be implemented in digital electronic circuitry, or in computer software, firmware, or hardware, including the structures disclosed in this specification and their structural equivalents, or in combinations of one or more of them. Unclaimed examples can be implemented as one or more computer program products, e.g., one or more modules of computer program instructions encoded on a computer readable medium for execution by, or to control the operation of, data processing apparatus. The computer readable medium can be a machine-readable storage device, a machine-readable storage substrate, a memory device, a composition of matter effecting a machine-readable propagated signal, or a combination of one or more of them. The term "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them. A propagated signal is an artificially generated signal, e.g., a machine-generated electrical, optical, or electromagnetic signal that is generated to encode information for transmission to suitable receiver apparatus.

A computer program (also known as a program, software, software application, script, or code) can be written in any form of programming language, including compiled or interpreted languages, and it can be deployed in any form, including as a stand alone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processors of any kind of digital computer. Generally, a processor will receive instructions and data from a read only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a tablet computer, a mobile telephone, a personal digital assistant (PDA), a mobile audio player, a Global Positioning System (GPS) receiver, to name just a few. Computer readable media suitable for storing computer program instructions and data include all forms of non volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

To provide for interaction with a user, unclaimed examples can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

Unclaimed examples can be implemented in a computing system that includes a back end component, e.g., as a data server, or that includes a middleware component, e.g., an application server, or that includes a front end component, e.g., a client computer having a graphical user interface or a Web browser through which a user can interact with an implementation of the invention, or any combination of one or more such back end, middleware, or front end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

In certain circumstances, multitasking and parallel processing may be advantageous. Moreover, the separation of various system components in the embodiments described above should not be understood as requiring such separation in all embodiments.

In each instance where an HTML file is mentioned, other file types or formats may be substituted. For instance, an HTML file may be replaced by an XML, JSON, plain text, or other types of files. Moreover, where a table or hash table is mentioned, other data structures (such as spreadsheets, relational databases, or structured files) may be used.

The invention is defined in the appended independent claims. Embodiments of the invention are defined in the appended dependent claims.

**Claims**

1. A neural network system for generating a system output from a system input, the neural network system comprising:

   a memory storing a set of register vectors and data defining a plurality of modules, wherein each module is a respective function that takes as input one or more first vectors and outputs a second vector;
   a controller neural network configured to, for each of a plurality of time steps:

      receive a neural network input for the time step; and
      process the neural network input for the time step to generate a neural network output for the time step;

   a subsystem configured to, for each of the plurality of time steps:

      determine, from the neural network output, inputs to each of the plurality of modules;
      process, for each of the modules, the input to the module using the module to generate a respective module output;
      determine, from the neural network output, updated values for the register vectors using the module outputs; and
      generate a neural network input for the next time step from the updated values of the register vectors; and

   an external variable-sized memory tape, wherein the plurality of modules comprises a first module that reads from the external variable-sized memory tape in accordance with the input to the first module and a second module that writes to the external variable-sized memory tape in accordance with the input to the second module;

and the subsystem is further configured to read a pointer as input from the variable-sized memory tape.

2. The neural network system of claim 1, wherein the subsystem is configured to initialize the external variable-sized memory tape with the system input.

3. The neural network system of claim 2, wherein the values stored in the external variable-sized memory tape after the last time step of the plurality of time steps are the system output.

4. The neural network system of any preceding claim, wherein the neural network input for the next time step is a binarized value of each of the register vectors.

5. The neural network system of any preceding claim, wherein the subsystem is further configured to, for each time step: determine, from the neural network output, whether the time step should be the last time step in the plurality of time steps.

6. The neural network system of any preceding claim, wherein the controller neural network is a recurrent neural network.

7. A method for generating a system output from a system input using a neural network system comprising a controller neural network configured to, for each of a plurality of time steps, receive a neural network input for the time step, and process the neural network input for the time step to generate a neural network output for the time step, the method comprising, for each of the plurality of time steps:

storing a set of register vectors and data defining a plurality of modules in memory, wherein each module is a respective function that takes as input one or more first vectors and outputs a second vector;
determining, using a subsystem of the neural network system and from the neural network output, inputs to each of a plurality of modules, wherein each module is a respective function that takes as input one or more first vectors and outputs a third vector;
processing, using the subsystem of the neural network system and for each of the modules, the input to the module using the module to generate a respective module output;
determining, using the subsystem of the neural network system and from the neural network output, updated values for a plurality of register vectors using the module outputs; and
generating, using the subsystem of the neural network system, a neural network input for the next time step from the updated values of the register vectors; and
wherein the neural network system further comprises a variable-sized memory tape external to the subsystem, the memory and the controller neural network, and wherein the plurality of modules comprises a first module that reads from the external variable-sized memory tape in accordance with the input to the first module and a second module that writes to the external variable-sized memory tape in accordance with the input to the second module; and the subsystem is further configured to read a pointer as input from the external variable-sized memory tape.

8. The method of claim 7, further comprising initializing the external variable-sized memory tape with the system input.

9. The method of claim 8, wherein the values stored in the external variable-sized memory tape after the last time step of the plurality of time steps are the system output.

10. The method of any one of claims 7 to 9, wherein the neural network input for the next time step is a binarized value of each of the register vectors.

11. The method of any one of claims 7 to 10, further comprising:
determining, from the neural network output, whether the time step should be the last time step in the plurality of time steps.

12. The method of any one of claims 7 to 11, wherein the controller neural network is a recurrent neural network.

**Patentansprüche**

1. Neuronalnetz-System zum Erzeugen einer Systemausgabe aus einer Systemeingabe, wobei das Neuronalnetz-System umfasst:

einen Speicher, der eine Menge von Registervektoren und Daten, die eine Vielzahl von Modulen definieren, speichert, worin jedes Modul eine jeweilige Funktion ist, die einen oder mehrere erste Vektoren als Eingabe nimmt und einen zweiten Vektor ausgibt;

ein Controller-Neuronalnetz, das dafür konfiguriert ist, für jeden einer Vielzahl von Zeitschritten:

eine Eingabe in das neuronale Netz für den Zeitschritt zu empfangen; und
die Eingabe in das neuronale Netz für den Zeitschritt zu verarbeiten, um eine Ausgabe des neuronalen Netzes für den Zeitschritt zu erzeugen;

ein Subsystem, das dafür konfiguriert ist, für jeden der Vielzahl von Zeitschritten:

aus der Ausgabe des neuronalen Netzes Eingaben in jedes der Vielzahl von Modulen zu bestimmen;
für jedes der Module die Eingabe in das Modul unter Verwendung des Moduls zu verarbeiten, um eine jeweilige Modulausgabe zu erzeugen;
aus der Ausgabe des neuronalen Netzes unter Verwendung der Modulausgaben aktualisierte Werte für die Registervektoren zu bestimmen; und
aus den aktualisierten Werten der Registervektoren eine Eingabe in das neuronale Netz für den nächsten Zeitschritt zu erzeugen; und
ein externes Speicherband variabler Größe, worin die Vielzahl von Modulen umfasst: ein erstes Modul, das gemäß der Eingabe in das erste Modul vom externen Speicherband variabler Größe liest, und ein zweites Modul, das gemäß der Eingabe in das zweite Modul auf das externe Speicherband variabler Größe schreibt; und wobei das Subsystem ferner dafür konfiguriert ist, einen Zeiger als Eingabe vom Speicherband variabler Größe zu lesen.

2. Neuronalnetz-System nach Anspruch 1, worin das Subsystem dafür konfiguriert ist, das externe Speicherband variabler Größe mit der Systemeingabe zu initialisieren.

3. Neuronalnetz-System nach Anspruch 2, worin die nach dem letzten Zeitschritt der Vielzahl von Zeitschritten auf dem externen Speicherband variabler Größe gespeicherten Werte die Systemausgabe sind.

4. Neuronalnetz-System nach einem der vorhergehenden Ansprüche, worin die Eingabe in das neuronale Netz für den nächsten Zeitschritt ein binarisierter Wert von jedem der Registervektoren ist.

5. Neuronalnetz-System nach einem der vorhergehenden Ansprüche, worin das Subsystem ferner dafür konfiguriert ist, für jeden Zeitschritt:
aus der Ausgabe des neuronalen Netzes zu bestimmen, ob der Zeitschritt der letzte Zeitschritt in der Vielzahl von Zeitschritten sein soll.

6. Neuronalnetz-System nach einem der vorhergehenden Ansprüche, worin das Controller-Neuronalnetz ein rekurrentes neuronales Netz ist.

7. Verfahren zum Erzeugen einer Systemausgabe aus einer Systemeingabe unter Verwendung eines Neuronalnetz-Systems, welches ein Controller-Neuronalnetz umfasst, das dafür konfiguriert ist, für jeden aus einer Vielzahl von Zeitschritten eine Eingabe in das neuronale Netz für den Zeitschritt zu empfangen und die Eingabe in das neuronale Netz für den Zeitschritt zu verarbeiten, um eine Ausgabe des neuronalen Netzes für den Zeitschritt zu erzeugen, wobei das Verfahren für jeden aus der Vielzahl von Zeitschritten umfasst:

Speichern einer Menge von Registervektoren und von Daten, die eine Vielzahl von Modulen definieren, in einem Speicher, worin jedes Modul eine jeweilige Funktion ist, die einen oder mehrere erste Vektoren als Eingabe nimmt und einen zweiten Vektor ausgibt;
unter Verwendung eines Subsystems des Neuronalnetz-Systems und aus der Ausgabe des neuronalen Netzes erfolgendes Bestimmen von Eingaben in jedes aus einer Vielzahl von Modulen, worin jedes Modul eine jeweilige Funktion ist, die einen oder mehrere erste Vektoren als Eingabe nimmt und einen dritten Vektor ausgibt;
unter Verwendung des Subsystems des Neuronalnetz-Systems und für jedes der Module erfolgendes Verarbeiten der Eingabe in das Modul unter Verwendung des Moduls, um eine jeweilige Modulausgabe zu erzeugen;
unter Verwendung des Subsystems des Neuronalnetz-Systems und aus der Ausgabe des neuronalen Netzes erfolgendes Bestimmen aktualisierter Werte für eine Vielzahl von Registervektoren unter Verwendung der Modulausgaben; und

unter Verwendung des Subsystems des Neuronalnetz-Systems erfolgendes Erzeugen einer Eingabe in das neuronale Netz für den nächsten Zeitschritt aus den aktualisierten Werten der Registervektoren; und

worin das Neuronalnetz-System ferner ein Speicherband variabler Größe außerhalb des Subsystems, des Speichers und des Controller-Neuronalnetzes umfasst, und worin die Vielzahl von Modulen umfasst: ein erstes Modul, das gemäß der Eingabe in das erste Modul vom externen Speicherband variabler Größe liest, und ein zweites Modul, das gemäß der Eingabe in das zweite Modul auf das externe Speicherband variabler Größe schreibt; und wobei das Subsystem ferner dafür konfiguriert ist, einen Zeiger als Eingabe vom externen Speicherband variabler Größe zu lesen.

8. Verfahren nach Anspruch 7, ferner umfassend: Initialisieren des externen Speicherbandes variabler Größe mit der Systemeingabe.

9. Verfahren nach Anspruch 8, worin die nach dem letzten Zeitschritt der Vielzahl von Zeitschritten auf dem externen Speicherband variabler Größe gespeicherten Werte die Systemausgabe sind.

10. Verfahren nach einem der Ansprüche 7 bis 9, worin die Eingabe in das neuronale Netz für den nächsten Zeitschritt ein binarisierter Wert von jedem der Registervektoren ist.

11. Verfahren nach einem der Ansprüche 7 bis 10, ferner umfassend:
Bestimmen aus der Ausgabe des neuronalen Netzes, ob der Zeitschritt der letzte Zeitschritt in der Vielzahl von Zeitschritten sein soll.

12. Verfahren nach einem der Ansprüche 7 bis 11, worin das Controller-Neuronalnetz ein rekurrentes neuronales Netz ist.

## Revendications

1. Système de réseau de neurones pour générer une sortie de système d'une entrée de système, le système de réseau de neurones comprenant:

une mémoire stockant un ensemble de vecteurs de registre et de données définissant une pluralité de modules, dans lequel chaque module est une fonction respective qui prend comme entrée un ou plusieurs premiers vecteurs et émet en sortie un second vecteur;

un réseau de neurones de contrôleur configuré pour, pour chacun d'une pluralité de pas de temps:

recevoir une entrée de réseau de neurones pour le pas de temps; et

traiter l'entrée de réseau de neurones pour le pas de temps pour générer une sortie de réseau de neurones pour le pas de temps;

un sous-système configuré pour, pour chacun de la pluralité de pas de temps:

déterminer, à partir de la sortie de réseau de neurones, des entrées pour chacun de la pluralité de modules;

traiter, pour chacun des modules, l'entrée au module en utilisant le module pour générer une sortie de module respective;

déterminer, à partir de la sortie de réseau de neurones, des valeurs mises à jour pour les vecteurs de registre en utilisant les sorties de module; et

générer une entrée de réseau de neurones pour le pas de temps suivant à partir des valeurs mises à jour des vecteurs de registre; et

une bande mémoire externe à taille variable, dans laquelle la pluralité de modules comprend un premier module qui effectue une lecture à partir de la bande mémoire externe à taille variable en fonction de l'entrée du premier module et un second module qui effectue une écriture sur la bande mémoire externe à taille variable en fonction de l'entrée du second module; et le sous-système est configuré en outre pour lire un pointeur comme entrée depuis la bande mémoire à taille variable.

2. Système de réseau de neurones selon la revendication 1, dans lequel le sous-système est configuré pour initialiser la bande mémoire externe à taille variable avec l'entrée de système.

3. Système de réseau de neurones selon la revendication 2, dans lequel les valeurs stockées dans la bande mémoire externe à taille variable après le dernier pas de temps de la pluralité de pas de temps sont la sortie du système.

4. Système de réseau de neurones selon l'une quelconque des revendications précédentes, dans lequel l'entrée de réseau de neurones pour le pas de temps suivant est une valeur mise sous forme binaire de chacun des vecteurs de registre.

5. Système de réseau de neurones selon l'une quelconque des revendications précédentes, dans lequel le sous-système est configuré en outre pour, pour chaque pas de temps:
déterminer, à partir de la sortie de réseau de neurones, si le pas de temps devrait être le dernier pas de temps dans la pluralité de pas de temps.

6. Système de réseau de neurones selon l'une quelconque des revendications précédentes, dans lequel le réseau de neurones de contrôleur est un réseau de neurones récurrent.

7. Procédé pour générer une sortie de système à partir d'une entrée de système en utilisant un système de réseau de neurones comprenant un réseau de neurones de contrôleur configuré pour, pour chacun d'une pluralité de pas de temps, recevoir une entrée de réseau de neurones pour le pas de temps, et traiter l'entrée de réseau de neurones pour le pas de temps pour générer une sortie de réseau de neurones pour le pas de temps, le procédé comprenant, pour chacun de la pluralité de pas de temps:

le stockage d'un ensemble de vecteurs de registre et de données définissant une pluralité de modules en mémoire, dans lequel chaque module est une fonction respective qui prend comme entrée un ou plusieurs premiers vecteurs et émet en sortie un second vecteur;
la détermination, en utilisant un sous-système du système de réseau de neurones et à partir de la sortie de réseau de neurones, d'entrées pour chacun d'une pluralité de modules, dans lequel chaque module est une fonction respective qui prend comme entrée un ou plusieurs premiers vecteurs et qui émet en sortie un troisième vecteur;
le traitement, en utilisant le sous-système du système de réseau de neurones et pour chacun des modules, de l'entrée du module en utilisant le module pour générer une sortie de module respective;
la détermination, en utilisant le sous-système du système de réseau de neurones et à partir de la sortie de réseau de neurones, de valeurs mises à jour pour une pluralité de vecteurs de registre en utilisant les sorties de module; et
la génération, en utilisant le sous-système du système de réseau de neurones, d'une entrée de réseau de neurones pour le pas de temps suivant à partir des valeurs mises à jour des vecteurs de registre; et
dans lequel le système de réseau de neurones comprend en outre une bande mémoire externe à taille variable par rapport au sous-système, à la mémoire et au réseau de neurones de contrôleur, et dans lequel la pluralité de modules comprend un premier module qui effectue une lecture à partir de la bande mémoire externe à taille variable en fonction de l'entrée du premier module et un second module qui effectue une écriture sur la bande mémoire externe à taille variable en fonction de l'entrée du second module; et le sous-système est configuré en outre pour lire un pointeur comme entrée depuis la bande mémoire externe à taille variable.

8. Procédé selon la revendication 7, comprenant en outre l'initialisation de la bande mémoire externe à taille variable avec l'entrée de système.

9. Procédé selon la revendication 8, dans lequel les valeurs stockées dans la bande mémoire externe à taille variable après le dernier pas de temps de la pluralité de pas de temps sont la sortie de système.

10. Procédé selon l'une quelconque des revendications 7 à 9, dans lequel l'entrée de réseau de neurones pour le pas de temps suivant est une valeur mise sous forme binaire de chacun des vecteurs de registre.

11. Procédé selon l'une quelconque des revendications 7 à 10, comprenant en outre:
la détermination, à partir de la sortie de réseau de neurones, si le pas de temps devrait être le dernier pas de temps dans la pluralité de pas de temps.

12. Procédé selon l'une quelconque des revendications 7 à 11, dans lequel le réseau de neurones de contrôleur est un réseau de neurones récurrent.

Controller Neural Network 102

*s*

*o*

*x*

Subsystem 106

Variable-Sized
Memory Tape
110

*r₂*

*w₂*

*x*

*y*

*r₁*

*w₁*

Memory
104

Neural Network System 100

FIG. 1

200

Store register vectors and data defining modules in memory **210**

Receive a neural network input for each of a plurality of time steps **220**

Process the neural network input to generate a neural network output **230**

Determine module inputs based on the neural network output **240**

Process the module inputs to generate module outputs **250**

Determine updated values for register vectors using the module outputs **260**

Generate a neural network input for a subsequent time step **270**

# FIG. 2

*300*

```
┌─────────────────────────────────────────────────┐
│                                                 │
│            Receive system input                 │
│                                        310      │
└─────────────────────────────────────────────────┘
                        │
                        ▼
┌─────────────────────────────────────────────────┐
│   Initialize an external variable-sized memory  │
│      tape with the system input        320      │
└─────────────────────────────────────────────────┘
                        │
                        ▼
┌─────────────────────────────────────────────────┐
│   Determine a first module input and a second   │
│            module input                330      │
└─────────────────────────────────────────────────┘
                        │
                        ▼
┌─────────────────────────────────────────────────┐
│  Read from the external variable-sized memory   │
│  tape in accordance with the first module input │
│                                        340      │
└─────────────────────────────────────────────────┘
                        │
                        ▼
┌─────────────────────────────────────────────────┐
│  Write to the external variable-size memory     │
│  tape in accordance with the second module input│
│                                        350      │
└─────────────────────────────────────────────────┘
```

**FIG. 3**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ALEX GRAVES et al.** *Neural Turing Machines,* 20 October 2014